# EUROPÄISCHE PATENTSCHRIFT

(11) **EP 0 313 902 B1**
(45) Veröffentlichungstag und Bekanntmachung des Hinweises auf die Patenterteilung: **13.01.1993**
(21) Anmeldenummer: 88116726.6
(22) Anmeldetag: 08.10.1988
(51) Int. Cl.: B01D 53/34, B01D 7/00, B09B 5/00, C22B 7/02

(54) **Verfahren zur Abtrennung von giftigen flüchtigen chemischen Verbindungen aus einem Gemenge von festen Partikeln mit einer Partikelgrösse bis 200 Mikron**
Method for separating poisonous, volatile chemical compounds from mixtures of solid particles with a size smaller than 200 microns
Méthode pour séparer des combinaisons toxiques et volatiles des particules solides d'une taille plus petite que 200 microns

(30) Priorität: 30.10.1987 CH 4262/87
(43) Veröffentlichungstag der Anmeldung: 03.05.1989
(73) Patentinhaber: BBC Brown Boveri AG, CH-5401 Baden (CH)
(72) Erfinder: Jochum, Joachim, Dr., CH-5405 Baden (CH); Jodeit, Harald, Dr., D-7897 Waldschut (DE); Wieckert, Christian, Dr., CH-5405 Baden (CH)

(56) Entgegenhaltungen:
- EP-A- 0 007 856
- FR-A- 1 356 615
- FR-A- 2 457 904
- US-A- 4 227 922
- US-A- 4 525 208
- PATENT ABSTRACT OF JAPAN, Band 10, Nr. 31 (C-327) [2088], 6. Februar 1986

## Beschreibung

Die Erfindung bezieht sich auf ein Verfahren zur Abtrennung von giftigen flüchtigen chemischen Verbindungen gemäss dem einleitenden Teil des Patentanspruchs 1.
Sie bezieht sich ferner auf eine Anordnung zur Durchführung dieses Verfahrens.

Filterstaub von industriellen Verbrennungsanlagen, speziell Elektrofilterstaub hat einen hohen Gehalt an die Umgebung belastenden, umweltfeindlichen und zum Teil giftigen Schadstoffen. Darunter fallen gewisse organische und vor allem Schwermetallverbindungen beispielsweise der Elemente Pb, Zn, Cd, Tl, Cu. Deshalb gelten für derartige Gemische Sonderbestimmungen und der Filterstaub ist als Sonderabfall zu betrachten und zu behandeln.

Die Behandlung erfolgt zur Zeit nach 3 Prinzipien:
- Agglomerierung und Kompaktierung des Staubes zu grösseren Stücken mit Hilfe von Bindemitteln wie Zement, Asphalt etc. Anschliessend Endlagerung auf einer Mülldeponie (vgl. "Behandlung und Verfestigung von Rückständen aus Kehrichtverbrennungsanlagen" Schriftenreihe Umweltschutz Nr. 62, Bundesamt für Umweltschutz, Bern 1987). Dabei entsteht ein Produkt, dessen Masse grösser ist als diejenige des losen Ausgangsmaterials. Deswegen wird die Endlagerung teuer und wegen des meist nur beschränkten, zur Verfügung stehenden Raumes problematisch.
- Chemische Behandlung mit Säuren. Die Schwermetallverbindungen werden mit wässrigen Säuren ausgelaugt. Der schwermetallfreie Rückstand wird in einer Deponie gelagert, die schwermetallhaltigen sauren Lösungen weiterverarbeitet (vgl. H.Vogg "Rauchgasreinigungsverfahren'', Vortrag beim VDI-Seminar 43-32-02 "Abfallbehandlung und -verwertung durch Müllverbrennung" VDI, Düsseldorf 1986). Diese Auslaugeverfahren stellen jedoch noch keine endgültigen Lösungen des Abfallproblems dar. Die Weiterbehandlung der schwermetallhaltigen Lösungen und deren Konzentrierung ist mit einem beträchtlichen Energieaufwand verbunden. Es werden neue Probleme (Abwasser, Umweltverschmutzung) geschaffen.
- Thermomechanische Trennung durch Erhitzen des schwermetallbeladenen Staubes in einem Gasstrom, Verdampfung der Schwermetallverbindungen und mechanische Abtrennung der festen suspendierten Partikel von der Gasphase bei hohen Temperaturen (Heissgaszyklon, Heissgasfilter etc.). Die Schwermetalldämpfe werden anschliessend in einem Kühler kondensiert (vgl. W. Weissweiler et al., ''Anreicherung von Thallium- und Bleihalogeniden", Staub, Reinhaltung der Luft, Bd. 46, Nr. 3, S. 120-124, März 1986). Die Heissgasabscheider (Zyklone, Elektrofilter, Keramikwabenfilter etc.) müssen bei hohen Temperaturen (1000 °C und mehr) isotherm arbeiten, was an ihre Konstruktion und ihren Betrieb sehr hohe Anforderungen stellt. Ausserdem ist eine Abtrennung des Feinstaubes (unter 1 µm Partikeldurchmesser), welcher prozentual als Träger der Schwermetallverbindungen übermässig stark ins Gewicht fällt, mit wirtschaftlichen Mitteln kaum zu bewerkstelligen.

Aus der EP 0 007 856 ist ein Verfahren zur Wiedergewinnung von Blei und Zink aus Abfallstoffen bekannt, bei welchem diese Abfallstoffe in ein mittels Elektroden beheizten Schmelzbad mit einem bestimmten Kohlenstoff-Gehalt eingedrückt werden. Als Transportmittel wird hierzu ein Gas verwendet. Blei und Zink entweichen in Dampfform und werden ausserhalb des Schmelzofens kondensiert. Zur Behandlung von Filterstaub ist dieses Verfahren nicht vorgesehen und grundsätzlich auch nicht geeignet.

Der Erfindung liegt die Aufgabe zugrunde, ein Verfahren zur Entfernung von giftigen flüchtigen chemischen Verbindungen aus einem Gemenge von festen Partikeln, stammend aus dem Filterstaub von Verbrennungsanlagen jeglicher Art anzugeben, welches unter Ausnutzung des Prinzips der Verdampfung und nachfolgenden Kondensation der abzutrennenden Schadstoffe die aufwendige Zuhilfenahme eines Trägergases und dessen nachfolgende mechanische Trennung von Schadstoffdampf und Staubpartikeln sowie eine nachherige Wiederanlagerung kondensierter Schadstoffe auf Feinstaubpartikeln vermeidet. Das Verfahren soll einfach sein und eine möglichst wirtschaftliche individuelle Weiterverarbeitung der verschiedenen getrennten Produkte zur Endlagerung gewährleisten.

Diese Aufgabe wird durch die im Patentanspruch 1 gekennzeichneten Merkmale gelöst. Eine zur Durchführung dieses Verfahrens geeignete Anordnung ist Gegenstand des Anspruchs 5.

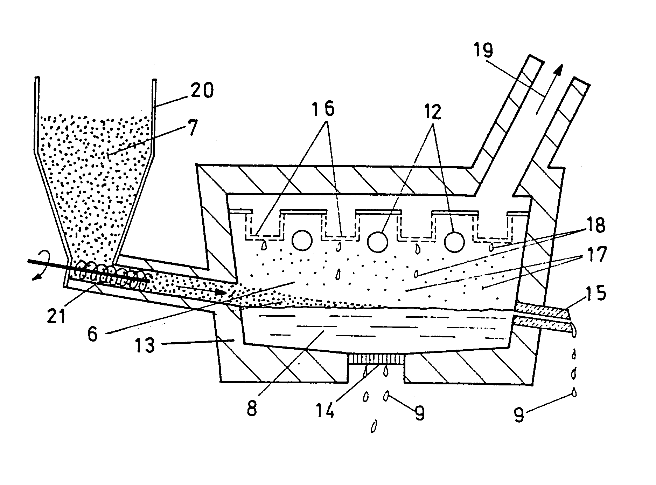

Die einzige Figur der Zeichnung zeigt in schematischer Form den Aufbau einer Anordnung zur Abtrennung von giftigen flüchtigen chemischen Verbindungen aus dem Staub einer Müllverbrennungsanlage mit kontinuierlicher Beschickung.

Zum Erhitzen und Einschmelzen des Staubes einer Müllverbrennungsanlage stand ein flacher Herdofen 13 aus keramischem Material (Al₂O₃) zur Verfügung. In seinem oberen Drittel befand sich eine Anzahl stabförmiger elektrischer Heizleiter 12 aus Siliziumkarbid. Dies gestattete, Ofenraumtemperaturen bis zu ca. 1450 °C zu erreichen. In der Mitte des Herdes, an der tiefsten Stelle war ein Gitter (Filter) 14 aus keramischem Material (Al₂O₃) angeordnet. Es besass eine Vielzahl von Durchlässen mit einer Weite von je 1 mm. Ueber den Heizleitern 12 befand sich ein Heissgasfilter 16 aus keramischem Material (Al₂O₃). Die Fasern des Filters hatten eine Dicke von 1 µm: die Porosität betrug mehr als 90 %. Es diente zur Zurückhaltung dervom im Reaktionsraum 6 gebildeten Gas- und Dampfstrom mitgerissenen und in Schwebe gehaltenen Feinstpartikel 17. Die am Heissgasfilter 16 zurückgehaltenen und verflüssigten Feinstpartikel konnten am letzteren herabrieseln und als Tropfen 18 in die Schmelze 8 gelangen. Oberhalb des Heissgasfilters 16 war der Abzug 19 für die gereinigte Dampf- und Gasphase zur Kühleinrichtung (nicht gezeichnet) hin angeordnet. Die Beschickung des Ofens 13 mit dem Gemenge 7 erfolgte von einem Behälter 20 aus über ein mechanisches Transportmittel 21, im vorliegenden Fall übereine Förderschnecke. Es wurde darauf geachtet, dass der Ofen 13 gegenüber der Umgebung luftdicht abgeschlossen war.

Der Ofen 13 wurde mit einer spezifischen Menge von 10 kg/h Filterstaub aus einer Müllverbrennungsanlage beschickt. Die Temperatur der Schmelze betrug ca. 1350 °C. Bei dieser Temperatur konnte ein kontinuierlicher Austrag der Schmelze erreicht werden. Die Tropfen 9 wurden in einem Wasserbehälter aufgefangen und granuliert.

Die Mengenverhältnisse stellten sich wie folgt:

| | |
|---|---|
| Schmelze: | 8,5 kg/h |
| Kondensat: | 1 kg/h |
| Gas: | 0,5 kg/h |

Filterstaub und Schmelze wurden vor und nach der Abtrennung der Schwermetallverbindungen analysiert. Dabei wurden folgende Mengenverhältnisse festgestellt:

| Menge | Vor der Trennung (Staub) | Nach der Trennung (Schmelze) |
|---|---|---|
| | 10 kg/h | 8,5 kg/h |
| Gehalt an Zn | 3,3 % | 2,2 % |
| Gehalt an Pb | 0,8 % | 0,08 % |
| Gehalt an Cd | 0,05 % | 0,008 % |

Die Proben wurden mit mit CO₂ gesättigtem Wasser ausgelaugt und die Lösungen auf ihren Gehalt anSchwermetallionen untersucht.

| Schwermetall | Vor der Trennung (Staub) | Nach der Trennung (Schmelze) |
|---|---|---|
| | (mg/l Lösung) | (mg/l Lösung) |
| Zn²⁺ | 1600 | 0,35 |
| Pb²⁺ | 13 | 0,15 |
| Cd²⁺ | 37 | 0,12 |

Obwohl also der grösste Teil des Zinks nicht etwa verdampfte, sondern sich offenbar mit anderen Staubbestandteilen wie SiO₂, CaO, MgO, Fe₂O₃ etc. zu Verbindungen umsetzte, wurde der lösliche Anteil auf ein unschädliches Mass herabgesetzt. Blei und Kadmium hingegen verdampften zu über 80 % und fanden sich im Kondensat wieder. Der geschmolzene und wieder erstarrte Rückstand kann deshalb unbedenklich auf einer gewöhnlichen Deponie ungiftiger Abfallstoffe gelagert werden.

Anstelle des Gitters 14 wurde der Ofen 13 in einer anderen Variante mit einem Ueberlaufrohr (Abstichöffnung) 19 als keramischem Material (Al₂O₃) für den Abzug der Schmelze 8 verwendet.

Das Gitter 14 bzw. das Ueberlaufrohr 15 kann steuerbar ausgeführt werden, so dass der Spiegel der Schmelze 8 sich immer auf gleichem Niveau befindet. Die Verweilzeit (Aufheizen + Haltezeit) eines jeden Anteils der Beschickung hängen von der Ofenkonstruktion und der Ofenführung (Leistung, Temperatur, Durchsetzmenge etc.) ab und können den jeweiligen Verhältnissen angepasst werden.

Die Erfindung erschöpft sich nicht in den Ausführungsbeispielen. Das Gemenge von Partikeln mit einer Grösse bis 200 µm wird kontinuierlich oder intermittierend (Chargenverfahren) in eine Zone sukzessive ansteigender Temperatur gebracht. Dabei wird die Temperatur zeitlich fortschreitend erhöht Die Verweilzeit wird so bemessen, dass jedes Partikel mit einer mittleren Geschwindigkeit von 5 bis 200 °C/min bis zu einer Temperatur von ca. 1350 °C erhitzt und eine gewisse Zeit bei der höchsten Temperatur gehalten wird. Dies führt auf Verweilzeiten von 1/2 h bis ca. 4 h. Die giftigen chemischen Verbindungen werden wenigstens teilweise verdampft und zum Verlassen des Reaktionsraumes gezwungen, anschliessend kondensiert und ausgetragen. Der nichtverdampfte Rückstand wird sukzessive eingeschmolzen, die Schmelze kontinuierlich oder intermittierend (chargenweise) aus dem Reaktionsraum ausgetragen, abgekühlt und zur Erstarrung gebracht. Das Gemenge von Partikeln wird vorzugsweise mechanisch in die Zone ansteigender Temperatur gefördert und mittels elektrischer Energie indirekt über eine Widerstands- oder Induktionsheizung oder mittels einer Gasheizung aufgeheizt. Das Austragen der Schmelze aus dem Sumpferfolgt übereine oder mehrere Oeffnungen eines Gitters, Filters, Ueberlaufs oder Syphons. Die durch den Gasund Dampfstrom (verdampfte chemische Verbindungen) mitgerissenen Partikel werden vorteilhafterweise an einem im Reaktionsraum untergebrachten, auf Schmelztemperatur der Partikel gehaltenen Heissgasfilter abgefangen, verflüssigt und in die Schmelze geleitet. Das keine schädlichen Mengen an Giftstoffen mehr enthaltende Material der Schmelze wird durch Formgiessen, Agglomerieren oder Brikettieren stückig gemacht oder durch Abschrecken granuliert.

Eine Vorrichtung zur Durchführung des Verfahrens, besteht aus einem elektrische Heizleiter oder Induktionsspulen oder Gasbrenner besitzenden Ofen, der am Eingang eine Einrichtung zur Beschickung und am Ausgang eine solche zum Austragen der Schmelze und Mittel zur Trennung ungeschmolzener Anteil des Gemenges/Schmelze und in Schwebe gehaltene Partikel/Gasphase besitzt. Diese Mittel sind aus keramischen Bauteilen hoher Korrosions- und Erosionsfestigkeit bei Betriebstemperatur, insbesondere gegen agressive Schmelzen gefertigt (Filter, Gitter, Ueberläufe, Gewebe, Vliese etc.).

## Patentansprüche

1. Verfahren zur Abtrennung von giftigen flüchtigen chemischen Verbindungen aus einem Gemenge (7) von festen Partikeln mit einer Partikelgrösse bis 200 Mikrometern, dadurch gekennzeichnet, dass das Gemenge (7) auf eine Temperatur von 1350 ^{o}C mittels Heizleitern (12) im Reaktionsraum (6) indirekt aufgeheizt wird, wodurch die giftigen chemischen Verbindungen im Gemenge wenigstens teilweise verdampft und zum Verlassen des Reaktionsraums (6) gezwungen und anschliessend durch Abkühlung kondensiert und ausgetragen werden, dass der nichtverdampfte Rückstand eingeschmolzen und die auf diese Weise gebildete Schmelze (8) aus dem Reaktionsraum (6) ausgetragen, abgekühlt und zur Erstarrung gebracht wird, und dass gleichzeitig die durch den Strom verdampften chemischen Verbindungen mitgerissenen Partikel (17) noch innerhalb des Reaktionsraums (6) abgefangen, verflüssigt und wieder in die Schmelze (8) zurückgeführt werden.

2. Verfahren nach Anspruch 1, dadurch gekennzeichnet, dass das Austragen der Schmelze (8) aus einem Sumpf über eine oder mehrere Oeffnungen in Form eines Keramik-Filters, Gitters (14) oder Syphons oder mittels eines Ueberlaufs (15) erfolgt.

3. Verfahren nach Anspruch 1 oder 2, dadurch gekennzeichnet, dass die mitgerissenen Partikel (17) an einem auf ihrer Schmelztemperatur gehaltenen Heissgasfilter (16) im Reaktionsraum (6) abgefangen, verflüssigt und in die Schmelze (8) zurückgeleitet werden.

4. Verfahren nach einem der Ansprüche 1 bis 3, dadurch gekennzeichnet, dass das Material der Schnmelze (8) durch Formgiessen, Agglomerieren oder Brikettieren stückig gemacht oder durch Abschrecken granuliert wird.

5. Anordnung zur- Durchführung des Verfahrens gemäss Anspruch 1 mit einem durch Heizleiter (12) beheizten Ofen (13) zum Schmelzen eines Gemenges (7), Mitteln (21) zur Beschickung des Ofens, einer Vorrichtung zum Austragen der Schmelze, einer Kühleinrichtung zum Auffangen von aus der Schmelze entweichenden flüchtigen chemischen Verbindungen, und Mitteln zur Trennung des noch ungeschmolzenen Anteils des Gemenges von der Schmelze, dadurch gekennzeichnet, dass im Ofen oberhalb der Schmelze ein Heissgasfilter (16) vorgesehen ist.

6. Anordnung nach Anspruch 5, dadurch gekennzeichnet, dass das Heissgasfilter (16) Filter in Form von Geweben, engmaschigen Gittern und Vliesen hoher Korrosions- und Erosionsfestigkeit umfasst, welches Heissgasfilter (16) durch die Ofenheizung aufgeheizt wird.

## Claims

1. Process for separating off poisonous volatile chemical compounds from a mixture (7) of solid particles having a particle size of up to 200 micrometres, characterised in that the mixture (7) is indirectly heated up in the reaction space (6) to a temperature of 1350°C by means of heat conductors (12), at least some of the poisonous chemical compounds in the mixture being evaporated and forced to leave the reaction space (6) and subsequently being condensed by cooling and being discharged, in that the non-evaporated residue is melted and the melt (8) thus formed is discharged from the reaction space (6), cooled and solidified and in that the particles (17) carried over by the stream (lacuna) evaporated chemical compounds are simultaneously trapped while still within the reaction space (6), liquefied and returned to the melt (8).

2. Process according to Claim 1, characterised in that the discharge of the melt (8) takes place from the bottom through one or more openings in the form of a ceramic filter, grid (14) or syphon or by way of an overflow (15).

3. Process according to Claim 1 or 2, characterised in that the particles (17) carried over are trapped on a hot gas filter (16) maintained at the melting temperature of the particles and arranged in the reaction space (6), liquefied and returned to the melt (8).

4. Process according to one of Claims 1 to 3, characterised in that the material of the melt (8) is made into pieces by moulding, agglomerating or briquetting or is granulated by quenching.

5. Arrangement for carrying out the process according to Claim 1 having a furnace (13) heated by heat conductors (12) for melting a mixture (7), feeding means (21) for the furnace, a device for discharging the melt, a cooling device for collecting volatile chemical compounds escaping from the melt and means for separating the still unmelted portion of the mixture from the melt, characterised in that a hot gas filter (16) is provided in the furnace above the melt.

6. Arrangement according to Claim 5, characterised in that the hot gas filter (16) comprises filters in the form of fabrics, close-meshed grids and nonwovens having a high resistance to corrosion and erosion, which hot gas filter (16) is heated up by means of the furnace heating.

## Revendications

1. Procédé pour la séparation de composés chimiques volatils toxiques d'un mélange (7) de particules solides ayant une granulométrie allant jusqu'à 200 µm, caractérisé en ce que le mélange (7) est chauffé indirectement dans l'espace de réaction (6) jusqu'à une température de 1350°C à l'aide de conducteurs de chauffage (12), de sorte que les composés chimiques toxiques dans le mélange se vaporisent au moins partiellement et sont contraints à quitter l'espace de réaction (6) et sont alors condensés par refroidissement et évacués, en ce que le résidu non vaporisé est fondu et en ce que la masse fondue ainsi constituée (8) est évacuée hors de l'espace de réaction (6), refroidie et soumise à solidification, et en ce que, simultanément, les particules (17) entrainées par le courant de composés chimiques vaporisés sont piégées dans l'enceinte même de l'espace de réaction (6), liquéfiées et retournées à la masse fondue (8).

2. Procédé selon la revendication 1, caractérisé en ce que l'évacuation de la masse fondue (8) se fait à partir du fond par l'intermédiaire d'un ou de plusieurs orifices sous la forme d'un filtre en céramique, d'une grille (14), ou d'un syphon ou à partir d'un tuyau de trop-plein (15).

3. Procédé selon la revendication 1 ou 2, caractérisé en ce que les particules (17) entrainées sont piégées dans l'espace de réaction (6) par un filtre à gaz chauds (16) maintenu à leur température de fusion, sout liquéfiées et sont retournées dans la masse fondue.

4. Procédé selon l'une des revendications 1 à 3, caractérisé en ce que le matériau de la masse fondue (8) peut être aggloméré par coulage en forme, par agglomération ou briquetage ou granulé par trempe.

5. Installation pour la mise en oeuvre du procédé selon la revendication 1, comprenant un four (13) chauffé à l'aide de conducteurs de chauffage (12) pour fondre un mélange (7), des moyens (21) pour charger le four, un dispositif pour évacuer la masse fondue, un refroidisseur pour piéger les composés chimiques volatils qui s'échappent de la masse fondue, et des moyens pour séparer de la masse fondue la portion non encore fondue du mélange, caractérisé en ce qu'un filtre à gas chauds (16) est prévu dans le four au-dessus de la masse fondue.

6. Installation selon la revendication 5, caractérisée en ce que le filtre à gaz chauds (16) comprend un filtre sous la forme de tissus, de réseaux à mailles serrées et de matelas de fibres de haute résistance à la corrosion et à l'érosion, le filtre à gaz chauds (16) étant chauffé par le chauffage du four.
